# EUROPÄISCHE PATENTANMELDUNG

(11) **EP 1 150 135 A1**
(43) Veröffentlichungstag der Anmeldung: **31.10.2001**
(21) Anmeldenummer: 01101400.8
(22) Anmeldetag: 23.01.2001
(51) Int. Cl.: G01S 15/93

(54) **Einparkhilfe mit Temperaturkompensation**

(30) Priorität: 28.04.2000 DE 10020958
(71) Anmelder: Valeo Schalter und Sensoren GmbH, 74321 Bietigheim-Bissingen (DE)
(72) Erfinder: Lochte, Guido, 74235 Erlenbach (DE); Lill, Anton, 74348 Lauffen (DE); Kiemes, Jochen, 70499 Stuttgart (DE)
(74) Vertreter: Steimle, Josef, Dipl.-Ing.

(57) **Zusammenfassung**

Es wird eine Einparkhilfe für Kraftfahrzeuge mit Temperaturkompensationen vorgeschlagen, bei dem die Temperaturkompensation zentral für alle Ultraschallsensoren im Steuergerät durchgeführt wird.

## Beschreibung

Die Erfindung betrifft ein Steuergerät für eine Einparkhilfe für Kraftfahrzeuge mit mindestens einem Ultraschallsensor.

Einparkhilfen werden vor allem im rückwärtigen Bereich von Kraftfahrzeugen häufig eingesetzt, um Beschädigungen des Kraftfahrzeugs beim Einparken zu vermeiden. Nachteilig an diesen Einparkhilfen ist deren Temperaturabhängigkeit, welche vor allem bei niedrigen Außentemperaturen dazu führt, dass manche Hindernisse nicht detektiert werden.

Es sind auch Ultraschallsensoren bekannt, die eine interne Temperaturkompensation haben. Da jeder dieser Ultraschall-sensoren einen eigenen Temperaturfühler hat, sind die Kosten für die Temperaturkompensation hoch.

Der Erfindung liegt die Aufgabe zugrunde, eine Einparkhilfe mit Temperaturkompensation bereitzustellen, die eine hohe Detektionsrate aufweist und kostengünstig herstellbar ist.

Diese Aufgabe wird erfindungsgemäß gelöst durch ein Steuergerät für eine Einparkhilfe mit mindestens einem Ultraschallsensor, wobei das Steuergerät eine Temperaturkompensation des oder der Ultraschallsensoren aufweist, wobei das Steuergerät mit einem Datenbus verbunden ist, auf dem die Außentemperatur verfügbar ist, so dass die Temperaturkompensation des oder der Ultraschallsensoren ohne zusätzlichen Temperaturfühler erfolgen kann. Dadurch werden Kosten gespart und es können die gleichen Ultraschallsensoren für Einparkhilfen mit und ohne Temperaturkompensation eingesetzt werden.

In weiteren Ergänzungen der Erfindung, ist in dem Steuergerät eine Kennlinie der Temperaturabhängigkeit oder mehrere Stützstellen der Temperaturabhängigkeit des oder der Ultraschallsensoren abgespeichert, wobei im letztgenannten Fall das Steuergerät eine Interpolation zwischen den Stützstellen durchführt, so dass mit geringem Aufwand für jede Außentemperatur die geeignete Kompensation des oder der Ultraschallsensoren durchgeführt werden kann.

Bei einer anderen Ausführung der Erfindung ist in dem Steuergerät die Temperaturabhängigkeit der Schallgeschwindigkeit in Luft abgespeichert, so dass auch die Temperaturabhängigkeit der Schallgeschwindigkeit in Luft kompensiert werden kann und somit die Genauigkeit der Einparkhilfe verbessert wird. Auch bei dieser Ausgestaltung der Erfindung müssen keine zusätzlichen Bauteile vorgesehen werden, da die Außentemperatur auf dem Datenbus verfügbar ist und das Abspeichern der Temperaturabhängigkeit der Schallgeschwindigkeit in Luft im Steuergerät keine zusätzlichen Kosten verursacht.

Alle in der Beschreibung und den Patentansprüchen genannten Merkmale können sowohl einzeln als auch in beliebiger Kombination miteinander erfindungswesentlich sein.

## Patentansprüche

1. Steuergerät für eine Einparkhilfe für Kraftfahrzeuge mit mindestens einem Ultraschall-Sensor, **dadurch gekennzeichnet, dass** das Steuergerät eine Temperaturkompensation des oder der Ultraschall-Sensoren aufweist, und dass das Steuergerät mit einem Datenbus, auf dem die Außentemperatur verfügbar ist, verbunden ist.

2. Steuergerät nach Anspruch 1, **dadurch gekennzeichnet, dass** in dem Steuergerät eine Kennlinie der Temperaturabhängigkeit des oder der Ultraschall-Sensoren abgespeichert ist.

3. Steuergerät nach Anspruch 1, **dadurch gekennzeichnet, dass** in dem Steuergerät mehrere Stützstellen der Temperaturabhängigkeit des oder der Ultraschall-Sensoren abgespeichert sind, und dass das Steuergerät eine Interpolation zwischen den Stützstellen durchführt.

4. Vorrichtung nach einem der vorhergehenden Ansprüche, **dadurch gekennzeichnet, dass** in dem Steuergerät die Temperaturabhängigkeit der Schallgeschwindigkeit in Luft abgespeichert ist.
